# EUROPEAN PATENT APPLICATION

(11) **EP 3 246 179 A1**
(43) Date of publication of application: **22.11.2017**
(21) Application number: 17163820.8
(22) Date of filing: 30.03.2017
(51) Int. Cl.: B60C 9/00, B60C 9/20, B60C 9/22

(54) **PNEUMATIC TIRE HAVING STRUCTURE OF DUAL REINFORCEMENT BELT LAYER**

(30) Priority: 10.05.2016 KR 20160057187
(71) Applicant: Hankook Tire Co., Ltd., Seoul 06133 (KR)
(72) Inventor: Eom, Jae Ho, 34111 Daejeon (KR)
(74) Representative: Petraz, Gilberto Luigi

(57) **Abstract**

The present invention relates to a pneumatic tire (1) having a dual reinforcing belt structure, which minimizes deformation of the tire tread section (11) during high-speed driving, particularly deformation of the tire shoulder parts, suppresses a standing wave phenomenon, and enhances driving stability. The pneumatic tire having a dual reinforcing belt structure according to the invention includes a tread section (11), a sidewall section (12) and a bead section (14), in which the bead section is provided with a carcass (15) in a turned-up manner, a plurality of belt layers are provided by lamination between the carcass (15) and the tread section (11), and a reinforcing belt (100) is provided on top of the belt layer (16), while the reinforcing belt (100) is a dual reinforcing belt in which belts made of different materials are arranged. According to the configuration of the invention, there is obtained an effect that the growth of the tire tread shoulder parts and a standing wave are suppressed during high-speed driving, the tire cornering performance is enhanced to thereby enhance driving stability, repeated deformation and momentum in the belt section caused by dimensional growth of the tire are increased, and a potential problem that separation between the belt layers is accelerated is prevented.

## Description

### BACKGROUND OF THE INVENTION

### 1. Field of the Invention

The present invention relates to a pneumatic tire having a dual reinforcement belt structure, and more particularly, the invention relates to a pneumatic tire having a dual reinforcement belt structure, which minimizes deformation of the tire tread section, particularly deformation of the tire shoulder part, during high speed driving, suppresses the standing wave phenomenon, and enhances driving stability.

### 2. Description of the Related Art

Generally, a pneumatic tire comprises an inner liner that constitutes the inner circumference of the tire; a tread section that is brought into contact with the road surface and includes a belt layer; a carcass as a tire inner cord layer, which is the skeleton of the tire that supports load and endures impact; a sidewall section as a lateral part of the tire, which protects the carcass and performs a bending and stretching movement; and a bead section that winds the end portion of cord paper and mounts the tire on the rim.

On the other hand, the belt section of the tire is a reinforcing layer for the tire that absorbs or blocks impact caused by external forces, and such a belt is formed by topping a rubber layer above and below a cord made of a metal material. Multiple sheets of the belt thus formed are provided by lamination between the carcass and the tread section, and the laminate constitutes the belt part.

A reinforcing belt is provided on top of the belt part. Reinforcing belts are classified into edge cover reinforcing belts that cover the two belt edges, and full cover reinforcing belts that cover the entire width of the belt. A full cover reinforcing belt is used for the purpose of suppressing a phenomenon in which the entire belt section is lifted by a centrifugal force during high speed driving, and maintaining durability. An edge cover reinforcing belt is used for the purpose of suppressing a phenomenon in which the belt edges are lifted during high speed driving, and thereby enhancing high-speed durability.

During high speed driving, a rotating tire is subjected to a centrifugal force, and the tire dimension in the circumferential direction is changed. Such a factor of change in the tire dimension causes increased tire deformation during high speed driving compared to low speed driving, and acts as an unstable element for driving. It is generally known that the durability performance is highly correlated to stress concentration (increase in deformation energy). Particularly, at the time of high speed driving, a rapid temperature increase at the tire sidewall section caused by the generation of a standing wave can be observed. Therefore, in order to reduce heat generation during high speed driving, a technology for dispersing the deformation energy of the tire is needed.

Changes in the tread section that is brought into contact with the road surface during high speed driving and the sidewall section that affects the steering performance, that is changes in the dimension of the tire, become the largest mainly at the outer side that rotates (tread section in the circumferential direction). These phenomena cause a problem that driving stability is deteriorated, such as that a phenomenon of vibration of the tire and abnormal abrasion occur during driving. In other words, in the case of the tread section that is brought into contact with the road surface, the tire dimension in the circumferential direction is changed by the action of a centrifugal force.. Particularly in a case in which the dimensional change occurs lopsidedly between the left-hand side and the right-hand side based on the central line of the tire due to a weight difference in the tire, a phenomenon of vibration of the tire during driving as well as a phenomenon of pulling occur. Thus, the vehicle may be drifted at the time of braking, or early wear or one-sided wear occurs in the time due to vibration. In this regard, even with the smallest value of dimensional change, since the centrifugal force increases proportionally to the square of the speed, there is a problem that since tread growth is amplified along with an increase in the centrifugal force during high speed driving, and this growth results in a large force to be exerted to the tire, so that driving stability is deteriorated. There is also another potential problem that repeated deformation and momentum in the belt section caused by dimensional growth of the tire are increased, and separation between the belt layers is accelerated (see, for example, Japanese Unexamined Patent Application Publication No. 2012-066798 (published on April 5, 2012); Korean Unexamined Patent Application Publication No. 2012-0063085 (published on June 15, 2012), and Korean Unexamined Patent Application Publication No. 2015-0138894 (published on December 11, 2015)).

### SUMMARY OF THE INVENTION

The present invention was achieved in order to solve problems such as described above, and it is an object of the invention to provide a pneumatic tire having a dual reinforcing belt structure, which suppresses growth of the tire tread shoulder parts and a standing wave during high speed driving, enhances the tire cornering performance, and enhances driving stability.

Another object of the invention is to provide a pneumatic tire having a dual reinforcing belt structure, which prevents a potential problem that repeated deformation and momentum in the belt section caused by dimensional growth of the tire are increased, and separation between the belt layers is accelerated.

In order to achieve the objects described above, a pneumatic tire having a dual reinforcing belt structure according to one aspect of the present invention includes a tread section, a sidewall section and a bead section, in which the bead section is provided with a carcass in a turned-up manner, a plurality of belt layers are provided by lamination between the carcass and the tread section, and a reinforcing belt is provided on top of the belt layer, while the reinforcing belt is a dual reinforcing belt having belts formed from different materials are arranged.

The dual reinforcing belt may be composed of one layer (first layer) of a full cover reinforcing belt, and another layer (second layer) of a full cover reinforcing belt. One layer may be formed from a belt made of nylon, and the other layer may be formed from a belt made of a high-strength material. One layer made formed from a belt made of a nylon material, and the other layer may be formed from a belt having a nylon material and a high-strength material divided in different sections.

The dual reinforcing belt may be formed from one layer of a full cover reinforcing belt and another layer of an edge cover reinforcing belt. The full cover reinforcing belt in one layer may be formed from a belt made of nylon, and the edge cover reinforcing belt in the other layer may be formed from a belt made of a high-strength material.

The dual reinforcing belt may be formed from one layer of a full cover reinforcing belt. The full cover reinforcing belt in one layer may be formed from a belt in which a nylon material and a high-strength material are separated in different sections.

When the pneumatic tire having a dual reinforcing belt structure according to the present invention is used, there is obtained an effect in which growth of the tire tread shoulder parts and a standing wave are suppressed during high speed driving, the tire cornering performance is enhanced, driving stability is enhanced, and a potential problem that repeated deformation and momentum in the belt section caused by dimensional growth of the tire are increased so that separation between different belt layers is accelerated, can be prevented.

### BRIEF DESCRIPTION OF THE DRAWINGS

Fig. 1 is a cross-sectional view diagram illustrating a pneumatic tire according to the present invention.
Figs. 2(a) to 2(d) are configuration diagrams illustrating the dual reinforcing belt structure according to a first embodiment of the present invention.
Figs. 3(a) and 3(b) are configuration diagrams illustrating the dual reinforcing belt structure according to a second embodiment of the present invention.
Figs. 4(a) and 4(b) are configuration diagrams illustrating the dual reinforcing belt structure according to a third embodiment of the present invention.
Figs. 5(a) and 5(b) are graphs showing a comparison between the reinforcing belt structure of a Conventional Example and the dual reinforcing belt structure of an Invented Example in terms of the growth of the tire tread shoulder parts.
Fig. 6 is a graph showing a comparison between the reinforcing belt structure of the Conventional Example and the dual reinforcing belt structure of the Invented Example in terms of the standing wave.
Fig. 7 is a graph showing a comparison between the reinforcing belt structure of the Conventional Example and the dual reinforcing belt structure of the Invented Example in terms of the cornering performance.
Fig. 8 is a graph showing the results of a ride evaluation performed to make a comparison in terms of general tire performance between the reinforcing belt structure of the Conventional Example and the dual reinforcing belt structure of the Invented Example.

### DETAILED DESCRIPTION OF THE PREFERRED EMBODIMENTS

Hereinafter, preferred embodiments of the present invention will be described in detail with reference to the attached drawings. It should be noted that the same constituent elements shown in the attached drawings are represented by the same reference numeral. Furthermore, detailed explanations for known functions and configurations that may make the gist of the present invention ambiguous will not be given here. For the same reason, some constituent elements in the attached drawings are exaggerated, omitted or schematically illustrated.

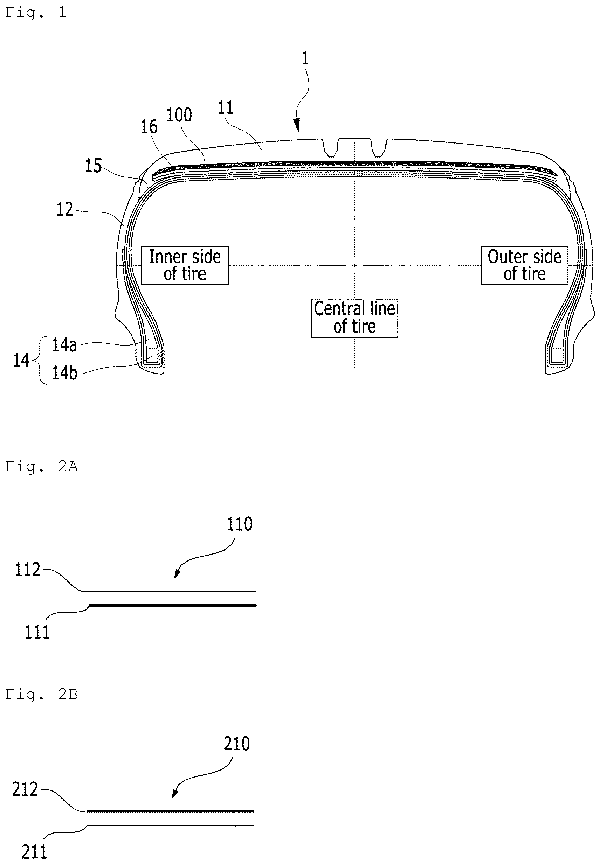

Fig. 1 is a cross-sectional view diagram illustrating a pneumatic tire according to the present invention. As illustrated in the diagram, the pneumatic tire (1) includes a tread section (11), a sidewall section (12) and a bead section (14), in which the bead section (14) is provided with a carcass in a turned-up manner, a plurality of belt layers (16) are provided by lamination between the carcass (15) and the tread section (11), and a reinforcing belt (100) is provided on top of the belt layer (16). The bead section (14) is composed of a bead filler section (14a) and a bead core section (14b).

The reinforcing belt (100) is formed from a dual reinforcing belt in which belts of different materials are arranged. The configuration of the parts of the pneumatic tire (1) except for the reinforcing belt (100) is a common configuration, and therefore, detailed explanation will not be given here.

Figs. 2(a) to 2(d) are configuration diagrams illustrating the dual reinforcing belt structure according to a first embodiment of the present invention. The dual reinforcing belts (110, 210, 310 and 410) according to the first embodiment are each composed of one layer (first layer) of a full cover reinforcing belt and another layer (second layer) of a full cover reinforcing belt.

The dual reinforcing belt (110) shown in Fig. 2 (a) represents an embodiment in which the full cover reinforcing belt of one layer (first layer as a lower layer) is a belt (111) made of a nylon material), and the full cover reinforcing belt of the other layer (second layer as an upper layer) is a belt (112) made of a high-strength material (hybrid material or Arimid material).

The dual reinforcing belt (210) shown in Fig. 2(b) represent an embodiment in which the full cover reinforcing belt of one layer (first layer as a lower layer) is a belt (211) made of a high-strength material (hybrid material or Arimid material), and the full cover reinforcing belt of the other layer (second layer as an upper layer) is a belt (212) made of a nylon material.

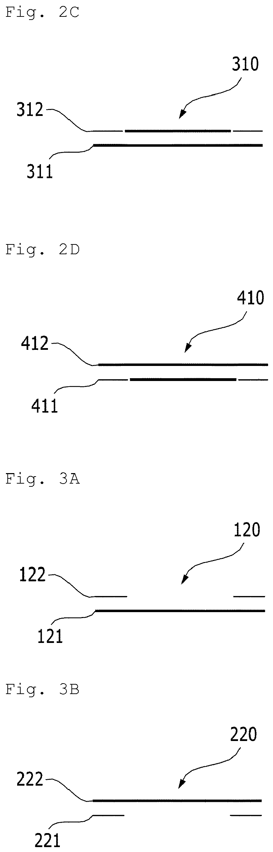

The dual reinforcing belt (310) shown in Fig. 2(c) represents an embodiment in which the full cover reinforcing belt of one layer (first layer as a lower layer) is a belt (311) made of a nylon material, and the full cover reinforcing belt of the other layer (second layer as an upper layer) is a belt (312) in which a nylon material and a high-strength material (hybrid material or Arimid material) are separated in different sections. The belt (312) contains the nylon material in the middle portion, and the high-strength material in the two edge portions.

The dual reinforcing belt (410) shown in Fig. 2(d) represents an embodiment in which the full cover reinforcing belt of one layer (first layer as a lower layer) is a belt (411) having a nylon material and a high-strength material (hybrid material or Arimid material) separated in different sections, and the full cover reinforcing belt of the other layer (second layer as an upper layer) is a belt (412) made of a nylon material. The belt (411) contains the nylon material in the middle portion, and the high-strength material in the two edge portions.

Figs. 3 (a) and 3(b) are configuration diagrams illustrating the dual reinforcing belt structure according to a second embodiment of the present invention. The dual reinforcing belts (120, 220) according to the second embodiment are each formed from one layer (first layer) of a full cover reinforcing belt and another layer (second layer) of an edge cover reinforcing belt.

The dual reinforcing belt (120) shown in Fig. 3(a) represents an embodiment in which the full cover reinforcing belt of one layer (first layer as a lower layer) is a belt (121) made of a nylon material, and the edge cover reinforcing belt of the other layer (second layer as an upper layer) is a belt (122) made of a high-strength material (hybrid material or Arimid material).

The dual reinforcing belt (220) shown in Fig. 3(b) represents an embodiment in which the edge cover reinforcing belt of one layer (first layer as a lower layer) is a belt (221) made of a high-strength material (hybrid material or Arimid material), and the full cover reinforcing belt of the other layer (second layer as an upper layer) is a belt (222) made of a nylon material.

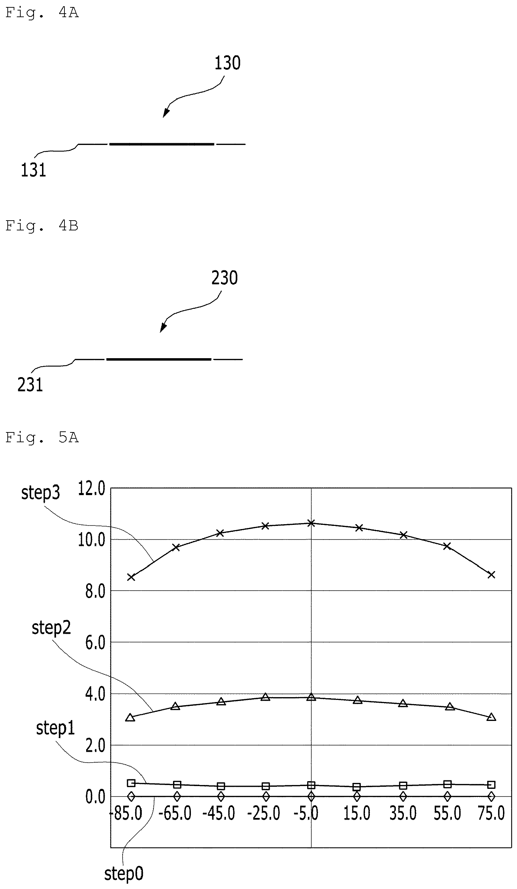

Figs. 4(a) and 4(b) are configuration diagrams illustrating the dual reinforcing belt structure according to a third embodiment of the present invention. The dual reinforcing belts (130, 230) according to the third embodiment are each formed from one layer of a full cover reinforcing belt.

The dual reinforcing belt (130) shown in Fig. 4(a) represents an embodiment in which the full cover reinforcing belt of one layer is a belt (131) having a nylon material and a high-strength material (hybrid material or Arimid material) separated in different sections, and the belt (131) contains the nylon material in the middle portion, and the high-strength material in the two edge portions.

In regard to the dual reinforcing belt (230) shown in Fig. 4(b), the full cover reinforcing belt of one layer is a belt (231) in which a nylon material and a high-strength material (hybrid material or Arimid material) are separated in different sections, and the belt (231) has the high-strength material in the middle portion, and the nylon material in the two edge portions.

In Fig. 2 to Fig. 4, the high-strength material is preferably a hybrid material having an EPI (end/inch) of 19.0 to 35.0, a cord diameter (mm) of 0.3 to 1.0, a TOP. GA (mm) of 0.60 to 1.25, and a strength (kgf) of at least 12.

In the following description, Test Examples in which a comparison was made between a pneumatic tire having a dual reinforcing belt structure according to the embodiments of the present invention having such a configuration, and a pneumatic tire having a conventional reinforcing belt structure, and the growth of the tread shoulder parts, the standing wave and the cornering performance were tested, and Evaluation Examples in which the ride performance was evaluated, will be explained.

The tire used for the test is a tire having a reinforcing belt structure in which the first layer is formed from a full cover reinforcing belt, and the second layer is an edge cover reinforcing belt. In the Conventional Example, a tire in which a reinforcing belt made of a nylon material was used for both the full cover reinforcing belt and the edge cover reinforcing belt, was used. In the Invented Example of the present invention, a tire in which the full cover reinforcing belt of the first layer was made of a nylon material, and the edge cover reinforcing belt of the second layer was made of a hybrid material as a high-strength material, was used. The tire size of the tire used for the Test Example of performing tests on the growth of tread shoulder parts, the standing wave and the cornering performance was 235/40ZR18 (tire size defined by Hankook Tire Group), and the tire size of the tire used for the Evaluation Example of evaluating the ride performance was 260/660R18F200 (tire size defined by Hankook Tire Group). Regarding the hybrid material as the high-strength material, a material having an EPI (end/inch) of 30.2, a cord diameter (mm) of 0.61, a TOP.GA (mm) of 0.85, and a strength (kgf) of at least 14, was used.

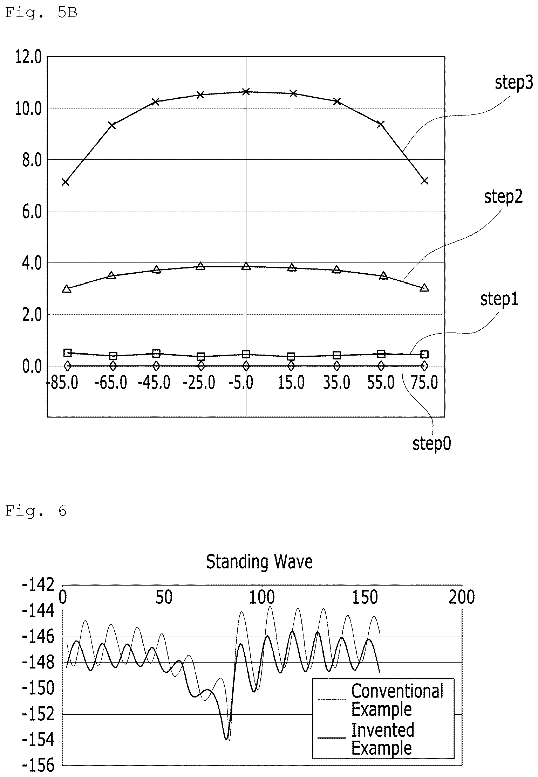

Figs. 5(a) and 5(b) are graphs showing a comparison made between the reinforcing belt structure of the Conventional Example and the dual reinforcing belt structure of the Invented Example in terms of the growth of the tire tread shoulder parts. In Fig. 5, the amount of growth of the tread shoulder parts depending on the driving speed is represented by tread variation, expressed in the unit mm, and the amount of growth was measured at four different levels of driving speed. Step 0 is a graph showing the amount of growth in the tread width at a driving speed of 5 km/h, Step 1 is a graph showing the amount of growth in the tread width at a driving speed of 100 km/h, Step 2 is a graph showing the amount of growth in the tread width at a driving speed of 200 km/h, and Step 3 is a graph showing the amount of growth in the tread width at a driving speed of 300 km/h. As shown in the graphs, it can be seen that the tire to which the Invented Example was applied exhibited an effect of suppressing the growth of the tire tread shoulder parts caused by a centrifugal force during high-speed driving, compared to the Conventional Example.

Fig. 6 is a graph showing a comparison between the reinforcing belt structure of the Conventional Example and the dual reinforcing belt structure of the Invented Example in terms of the standing wave. Fig. 6 describes the standing wave phenomenon at a driving speed of 280 km/h. As shown in the graph, it can be seen that in the tire to which the Invented Example was applied, the standing wave decreased by about 30% during high-speed driving (280 km/h) compared to the Conventional Example.

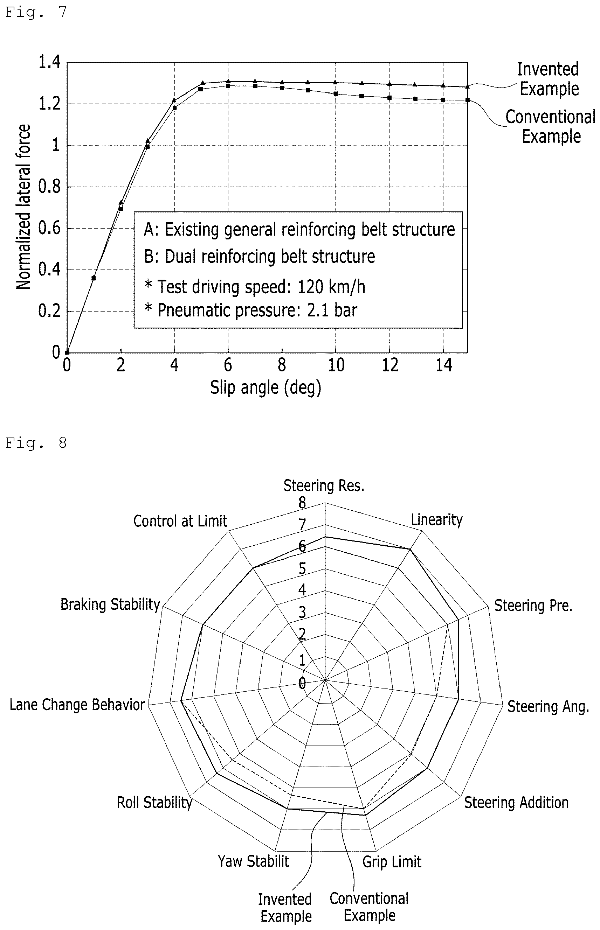

Fig. 7 is a graph showing a comparison between the reinforcing belt structure of the Conventional Example and the dual reinforcing belt structure of the Invented Example in terms of the cornering performance. In a test for the cornering performance (tire grip performance), the value of cornering force that varied with the slip angle was measured using a Flat Trac-3 tester (available in Hankook Tire Group) under the conditions of a vehicle driving speed of 120 km/h and a tire pneumatic pressure of 2.1 bar. As shown in the graph, it can be seen that the tire to which the Invented Example was applied exhibited a high cornering force value compared to the Conventional Example.

Fig. 8 is an evaluation graph showing the results of a ride evaluation performed to make a comparison between the reinforcing belt structure of the Conventional Example and the dual reinforcing belt structure of the Invented Example in terms of the general tire performance. The graph shows evaluation results obtained by classifying the various elements used for the ride evaluation of tires into eight items. As shown in the evaluation graph, the tire to which the Invented Example was applied exhibited enhanced steering response and enhanced grip power upon high-load cornering and low-load cornering, compared to the Conventional Example. It can be seen that particularly at the time of cornering, rigidity of the tire shoulder parts increased, the tire movement and roll performance was lowered significantly, and the traction performance from corner entry to exit was enhanced.

Meanwhile, the embodiments of the present invention disclosed in the present specification and the drawings are intended to suggest specific examples in order to explain the technical matters of the present invention clearly and to assist understanding of the present invention, and are not intended to limit the scope of the present invention. It is obvious to those having ordinary skill in the technical field to which the present invention is pertained, that in addition to the embodiments disclosed herein, other modifications based on the technical idea of the invention are also included in the scope of the invention.

### Reference Numerals

1: Pneumatic tire
11: Tread section
12: Sidewall section
14: Bead section
15: Carcass
16: Belt layer
100: Reinforcing belt
110, 210, 310, 410, 120, 220, 130, 230: Dual reinforcing belt

## Claims

1. A pneumatic tire having a dual reinforcing belt structure, the pneumatic tire comprising a tread section, a sidewall section and a bead section,
wherein the bead section is provided with a carcass in a turned-up manner, a plurality of belt layers are provided by lamination between the carcass and the tread section, a reinforcing belt is provided on top of the belt layer, and
the reinforcing belt is a dual reinforcing belt in which belts made of different materials are arranged.

2. The pneumatic tire having a dual reinforcing belt structure according to claim 1, wherein the dual reinforcing belt is formed from one layer of a full cover reinforcing belt and another layer of a full cover reinforcing belt.

3. The pneumatic tire having a dual reinforcing belt structure according to claim 2, wherein the one layer is formed from a belt made of a nylon material, and the other layer is formed from a belt made of a high-strength material.

4. The pneumatic tire having a dual reinforcing belt structure according to claim 2, wherein the one layer is formed from a belt made of a nylon material, and the other layer is formed from a belt in which a nylon material and a high-strength material are separated in different sections.

5. The pneumatic tire having a dual reinforcing belt structure according to claim 1, wherein the dual reinforcing belt is formed from one layer of a full cover reinforcing belt and another layer of an edge cover reinforcing belt.

6. The pneumatic tire having a dual reinforcing belt structure according to claim 5, wherein the full cover reinforcing belt of the one layer is formed from a belt made of a nylon material, and the edge cover reinforcing belt of the other layer is formed from a belt made of a high-strength material.

7. The pneumatic tire having a dual reinforcing belt structure according to claim 1, wherein the dual reinforcing belt is formed from one layer of a full cover reinforcing belt.

8. The pneumatic tire having a dual reinforcing belt structure according to claim 7, wherein the full cover reinforcing belt of the one layer is formed from a belt in which a nylon material and a high-strength material are separated in different sections.

9. The pneumatic tire having a dual reinforcing belt structure according to any one of claims 3, 4, 6 and 8, wherein the high-strength material is a hybrid material having an EPI (end/inch) of 19.0 to 35.0, a cord diameter (mm) of 0.3 to 1.0, a TOP.GA (mm) of 0.60 to 1.25, and a strength (kgf) of at least 12.
